(19) Europäisches Patentamt

European Patent Office

Office européen des brevets

(11) **EP 1 688 786 A1**

(12) **EUROPEAN PATENT APPLICATION**
published in accordance with Art. 158(3) EPC

(43) Date of publication:
09.08.2006 Bulletin 2006/32

(51) Int Cl.:
*G03B 21/00* (2006.01)

(21) Application number: 04792653.0

(22) Date of filing: 20.10.2004

(86) International application number:
PCT/JP2004/015487

(87) International publication number:
WO 2005/043234 (12.05.2005 Gazette 2005/19)

(84) Designated Contracting States:
BE DE NL

(30) Priority: 31.10.2003 JP 2003372580
26.03.2004 JP 2004092900

(71) Applicant: SHARP KABUSHIKI KAISHA
Osaka 545-8522 (JP)

(72) Inventors:
• SAITO, Sakae
Chiba-shi, Chiba 2630051 (JP)

• KIKKAWA, Itsuro
Chiba-shi, Chiba 2620032 (JP)
• TAKEDA, Akinobu
Bunkyo-ku,
Tokyo 112-0004 (JP)

(74) Representative: Müller, Frithjof E.
Müller Hoffmann & Partner
Patentanwälte
Innere Wiener Strasse 17
81667 München (DE)

(54) **REFLECTOR, LIGHT SOURCE DEVICE AND PROJECTION DISPLAY APPARATUS**

(57) A concave mirror substrate 1 constituting a reflector is composed of a base material having a high thermal conductivity such as aluminum etc. An infrared-to-heat converting layer 2 is film-formed by anodizing the substrate formed of aluminum etc., so as to absorb light in a wavelength range which passes through a visible light reflecting layer 4 and convert it into heat. A gloss-forming buffer layer 3 is film-formed by calcining Si resin or polyimide resin over the inner side (the light source-side surface) of infrared-to-heat converting layer 2 at high temperatures, so as to buffer the two layers in a manner that does not allow infrared-to-heat converting layer 2 and visible light reflecting layer 4 to be in direct contact with each other, and so as to reduce the influence of projections and indentations present on infrared-to-heat converting layer 2 and smoothen the light source-side surface of visible light reflecting layer 4.

In this way, it is possible to suppress performance degradation by efficient discharge of heat by converting light into heat and by alleviating thermal stress and strain due to the difference in expansion coefficient between components, and it is also possible to achieve reduction in cost, miniaturization and weight reduction.

FIG. 1

**Description**

Technical Field

The present invention relates to a reflector for reflecting light emitted from a light source to a desired direction, a light source device having the reflector and a projection display apparatus including the light source device having the reflector.

Background Art

Conventional projection display apparatuses use a metal halide lamp, high-pressure mercury lamp or the like as a high-intensity light source with a reflector that reflects light emitted from the light source to a desired direction. This reflector is mainly composed of a concave mirror having the function of reflecting light from the light source in a desired direction.

Since the metal halide lamp or high-pressure mercury lamp entails a high generation of heat, it is necessary to forcibly cool it down because the lamp itself reaches a high temperature during usage. Specifically, if the lamp itself reaches a high temperature during usage, an excessive rise in temperature of the lamp body and the concave mirror for reflecting light from the lamp in a desired direction will take place, causing various troubles such as reduction of the lamp life, degradation of the reflecting layer of the concave mirror and the like. This is why the aforementioned high-intensity light source device indispensably needs a cooling systemthat forcibly cools down the light source device as a whole by arranging cooling fans around the light source device having the light source and reflector.

Conventionally, the main current of such projection display apparatusesusing a high-intensitylightsource device has been of relatively large, mounted types. Recently there have been, however, demands for compact lightweight types for easy carriage. To deal with this, there is also a need for compact high-intensity light source devices for compact projection display apparatuses.

In order to miniaturize the light source device, it is necessary to not only make the size of the lamp compact but also miniaturize the convex mirror as a main component of the reflector. However, since the concave mirror (reflector) also plays a role of a radiator of the light source, there occurs the problem that the radiating performance of the light source itself is lowered if the concave mirror is made small in size.

To deal with this problem, a configuration has been proposed which includes: a means for mounting a cooling blower fan for blowing cooling air from the arc tube side; a means for cooling the arc tube and a sealing tube part with the blown cooling air and allowing the air to pass through an arc tube insertion cylinder and cool another sealing tube part; and a means for discharging heat to the outside of the projection display apparatus (see Patent literature 1, for example).

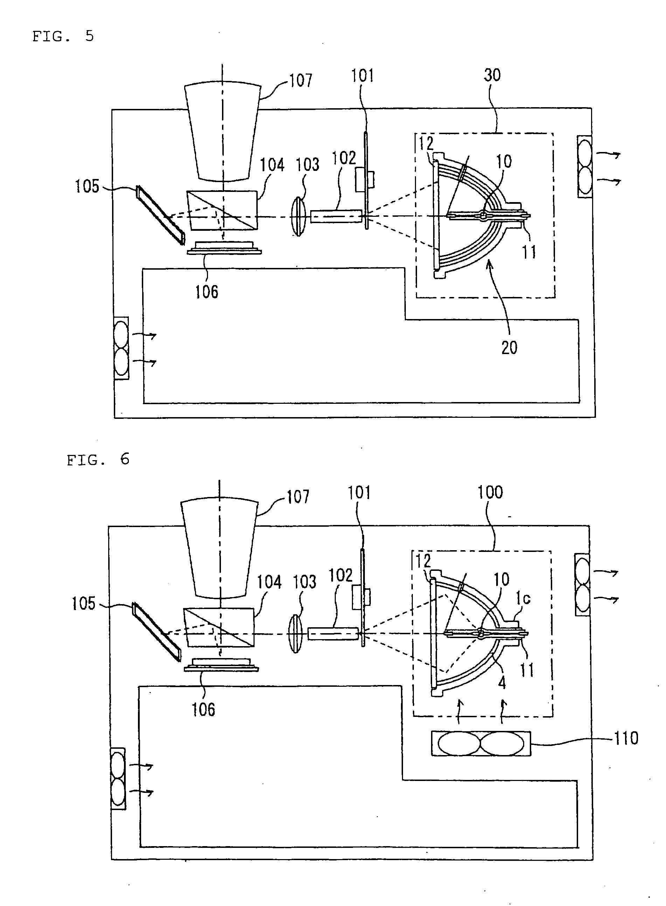

FIG. 6 shows a configurational view showing an overall structure of a conventional reflector, light source device and projection display apparatus.

In the figure, the conventional projection display apparatus includes: as essential constituents, a light source device 100 including a reflector; a rotational color wheel 101; a rod lens 102; a condenser lens 103; a TIR prism 104; a reflectionmirror 105; an optical modulator 106; a projection lens 107 (optical system for enlarged projection); and a forced cooling system 110.

Light-source device 100 includes a concave mirror substrate 1c, a visible-light reflecting layer 4, a light source 10, a bonding material 11 and a transparent explosion-proof glass 12.

To begin with, the structure and function of the conventional light source device will be described next.

In FIG. 5 concave mirror substrate 1c of conventional light source device 100 is formed of a base material of aluminum or the like. The interior side (the light source-side surface) of this concave mirror substrate 1c is formed with a visible light reflecting layer 4 of a cold mirror layer. This visible light reflecting layer 4 has the function of permitting infrared rays radiated from light source 10 to pass therethrough and selectively reflecting visible light. Here, light source 10 is composed of multi-layered interference coatings of alternately deposited layers of titanium dioxide and silicon dioxide, and is bonded to concave mirror substrate 1 with bonding material 11.

Next, the function of the conventional projection display apparatus shown in FIG. 6 will be described.

Light emitted from light source 10 is reflected off visible light reflecting layer 4 constituting a concave reflection mirror and passes through rotating color wheel 101, sequentially producing R, G and B light in time division. Light having passed through color wheel 101 is diffused and shaped by rod lens 102 and passes through condenser lens 103, TIR prism 104 and reflection mirror 105, then is projected onto optical modulator 106. Optical modulator 106 performs optical modulation in accordance with the color of the projected light and image information. Then the optically-modulated light is projected on a screen (not shown) by way of enlargement projection optical system 107 so that a full-color image can be displayed.

Since enhancing the forced cooling system 110 means enlargement of the forced cooling system itself, this is contradictory to the aim of reducing the system in size. Further, there also occurs a cooling fan noise problem.

To deal with this, a means for enhancing cooling performance by improving the heat radiation ability of the reflector itself has been disclosed. More specifically, a means for improving the heat radiation ability of the reflector itself has been proposed (see Patent literature 2, for example) by forming a thin film of black oxides of elements selected from a group of silicon, titanium and chromium between the visible light reflecting layer 4 and the concave mirror substrate 1, by vapor evaporation, as a means of absorbing infrared rays radiated from the lamp by a visible light reflecting means (visible light reflecting layer 4) and efficiently transferring the absorbed energy as heat to the concave mirror substrate 1 (metallic or ceramic substrate).

An enhanced heat radiation reflector generally includes: a specific wavelength range reflecting means (visible light reflecting layer) for reflecting light of a specific wavelength range; a light-to-heat conversion means (light-to-heat converting layer containing black oxides etc.) for absorbing light of the wavelength range that transmits through the reflecting means and converting it into heat; and a heat radiating means (ceramic heat radiating layer containingmetals such as aluminum, copper, iron etc., silicon carbide, or the like) for radiating heat that was converted from light by the light-to-heat converting means, wherein the light-to-heat converting means is disposed between the heat radiating means and the specific wavelength range reflecting means while the light-to-heat converting means and the specific wavelength range reflecting means are laminated in direct contact with each other.

Patent literature 1:

Japanese Patent Application Laid-open Hei 11-39934

Patent literature 2:

Japanese Patent Application Laid-open Sho 64-90401

Disclosure of Invention

Problems to be Solved by the Invention

However, in the conventional reflector, light source device and projection display apparatus described in the above background art, since heat generated by the light-to-heat converting means when, for example a reflector of the aforementioned enhanced heat radiation type is used, is conducted not only to the heat radiating means but also to the specific wavelength range reflecting means side, there occurs the problem in that the properties of the specific wavelength range reflecting means are degraded by heat stress.

Further, when the light-to-heat converting means and the specific wavelength range reflecting means are directly joined to each other, there has been also a problem in that stress/strain occurs at the joined interface due to the difference in expansion coefficient, causing the specific wavelength range reflecting means to peel off or be broken.

Moreover, in order to improve the light-to-heat converting means in light absorbing efficiency it is preferred to make the aforementioned surface non-smooth by creating jaggedness across the light source-side light-to-heat converting means surface. In this case, however, since the surface of the specific wavelength range reflecting means that is laminated over the light-to-heat converting means looses smoothness, this gives rise to a problem that the performance of the specific wavelength range reflecting means is degraded.

The present invention has been devised in view of the above conventional problems, it is therefore an object of the present invention to provide a reflector, light source device and projection display apparatus, by which performance degradation can be suppressed by efficient discharge of heat by converting light into heat, and by alleviating thermal stress and strain due to the difference in expansion coefficient between components, and by which the cost, size and weight can be reduced.

Means for Solving the Problems

In order to solve the above problems, a reflector of the present invention includes: a heat radiating means composed of a concave mirror-shaped substrate; alight-to-heat converting component arranged on the light-reflecting surface side of the heat radiating means for absorbing light of a predetermined wavelength range and converting it to heat; a specific wavelength range reflecting component which reflects light of a specific wavelength range onto the light-to-heat converting component and permits light in the perdetermined wavelength range to pass therethrough; and a buffering component disposed between the light-to-heat converting component and the specific wavelength range reflecting component for buffering so that the light-to-heat converting component and the specific wavelength range reflecting component will not come in direct contact with each other and for permitting light of a predetermined wavelength range that passes through the specific wavelength range reflecting component to pass therethrough.

The reflector is characterized in that the light-to-heat converting component, the buffering component and the specific wavelength range reflecting component are laminated in the order mentioned over the reflective surface of the heat radiating means and joined in surface contact with one another.

The reflector is characterized in that projections and indentations are formed over the joined interface where the light-to-heat converting component and the heat radiating means are joined.

The reflector is characterized in that projections and indentations are formed over the buffering component-side surface of the light-to-heat converting component.

The reflector is characterized in that the heat radiating means is composed of a substrate having a thermal conductivity of 10 W/m·K or greater and also provides the function of the infrared-to-heat converting component.

The reflector is characterized in that light-to-heat converting component is formed by anodizing aluminum in an aqueous solution of chromic anhydride.

The reflector is characterized in that the buffering component is film-formed on the light-absorbing surface side of the light-to-heat converting component by calcining Si resin or polyimide resin at high temperatures.

The reflector is characterized in that radiating fins are provided on the outer surface of the concave mirror-shaped substrate and integrally formed with the substrate.

A light source device according to the present invention includes one of the above reflectors.

A projection display apparatus according to the present invention includes the above light source device.

Effect of the Invention

According to the present invention, it is possible for the light-to-heat converting means to absorb light in a wavelength range that passes through the specific wavelength range reflecting component and efficiently convert it into heat, and provision of the buffering component brings about the following effects.

(1) It is possible to suppress deformation of the heat radiating means occurring as a result of the generation of stress from heat due to the difference in thermal expansion arising at the joined interface between the light-to-heat converting component and the specific wavelength range reflecting component, whereby it is possible to prevent the phenomenon of the projected light from the light source not propagating straight.

(2) It is possible to alleviate the influence of jaggedness present in the light-to-heat converting component and smoothen the light source-side surface of the specific wavelength range reflecting component, whereby it is possible to prevent the phenomenon of the projected light from the light source not propagating straight.

Provision of projections and indentations at the joined interface where the light-to-heat converting component and the heat radiating means are joined, makes it possible

(1) to improve the infrared absorption efficiency of the light-to-heat converting component surface; and
(2) to diffuse infrared rays so that the reflected infrared rays will not concentrate on a particular point.

Further, provision of projections and indentations on the buffering component-side surface of the light-to-heat converting component makes it possible to realize a reflector which

(1) canmake light that could not be absorbed but was reflected, incident once again on the light-to-heat converting component; and
(2) can prevent light that could not be absorbed but was reflected, from concentrating on a particular point.

Further, since the heat-radiating means is composed of a base material having a thermal conductivity of 10 W/m·K so that it can also function as an infrared-to-heat converting component, if the base material of the heat radiating means is formed of, for example aluminum it is possible to improve the heat radiation performance of the light source device having this reflector as a whole, whereby it is possible to make the forced cooling system for the light source simple and compact and achieve a long life of the light source device.

Also, the integration of radiating fins on and with the outer surface of the concave mirror-shaped substrate makes it possible to improve the efficiency of radiating heat to the ambient air of the light source device.

Moreover, since it is possible to omit the forced cooling system for forcibly cooling the reflector's heat radiating means, it is possible to provide a projection display apparatus for which the manufacturing cost can be reduced and of which the size and weight can reduced.

Brief Description of the Drawings

[FIG. 1] FIG. 1 is a configurational view showing an overall structure of a light source device including a reflector according to the first embodiment of the present invention.
[FIG. 2] FIG. 2 is a graph showing the relationships of the reflector's inner surface temperature vs. the input power for a light source device including a reflector of the present invention and for a light source device including a conventional reflector.
[FIG. 3] FIG. 3 is a configurational view showing a reflector structure according to the second embodiment of the present invention.
[FIG. 4] FIG. 4 is a configurational view showing an overall structure of a light source device including a reflector according to the fourth embodiment of the present invention.
[FIG. 5] FIG. 5 is a configurational view showing an overall structure of a projection display apparatus according to the fifth embodiment of the present invention.
[FIG. 6] FIG. 6 is a configurational view showing an overall structure of a conventional reflector, light source device and projection display apparatus.

Description of Reference Numerals

1 concave mirror substrate (heat radiating means)
2 infrared-to-heat conversion layer (light-to-heat converting component)
3 gloss-forming buffer layer (buffering component)
4 visible light reflecting layer (specific wavelength range reflecting component)
10 light source
20 reflector
30 light source device
11 bonding material
12 explosion-proof glass
101 color wheel
102 rod lens
103 condenser lens
104 TIR prism
105 reflection mirror
106 optical modulator
107 projection lens

Best Mode for Carrying Out the Invention

Hereinbelow, the best embodied modes of the reflector, light source device and projection display apparatus of the present invention will be described in detail sequentially from the first to fifth embodiments with reference to the drawings.

[The first embodiment]

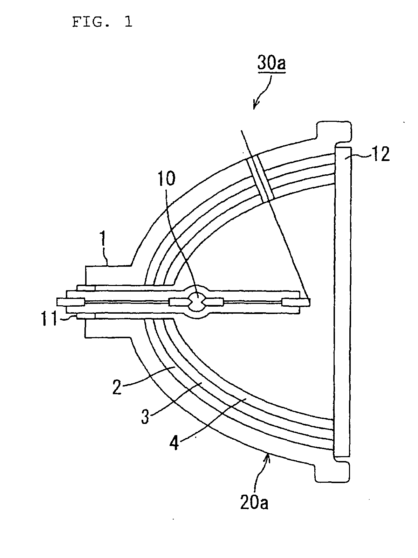

FIG. 1 is a configurational view showing an overall structure of a light source device including a reflector according to the first embodiment of the present invention. Here, the same components as in the conventional reflector shown in FIG. 6 are allotted with the same reference numerals.
In the figure, a light source device 30a according to the first embodiment of the present invention includes a light source 10 and a transparent explosion-proof glass 12, in addition to a reflector 20a. Reflector 20a is comprised of a concave mirror substrate (heat radiating means) 1, and an infrared-to-heat converting layer (light-to-heat converting component) 2, a gloss-forming buffer layer (buffering layer) 3 and a visible light reflecting layer (specific wavelength range reflecting component) 4, laminated on the mirror surface side (the light source-side surface) of concave mirror substrate 1.
Next, the detailed configurations and functions of the reflector and light source device according to the present embodiment will be described.

In FIG. 1, reflector 20a of the present embodiment is composed of concave mirror substrate 1, infrared-to-heat converting layer 2, gloss-forming buffer layer 3 and visible light reflecting layer 4, laminated in the order mentioned. These layers are joined in surface contact with each other.

Concave mirror substrate 1 is composed of a base material such as aluminum etc., having a high thermal conductivity. Infrared-to-heat converting layer 2 is film-formed on the concave mirror side by anodizing the substrate made of aluminum etc. Gloss-forming buffer layer 3 is film-formed on infrared-to-heat converting layer 2 (on the light absorbing surface side) by calcining Si resin or polyimide resin at high temperatures. Infrared-to-heat converting layer 2 absorbs light in a wavelength range which passes through visible light reflecting layer 4 and converts it efficiently into heat.

Visible light reflecting layer 4 is composed of a cold mirror layer that is formed on gloss-forming buffer layer 3 and permits infrared rays to pass therethrough and selectively reflects visible light.

Light source 10 is composed of multi-layered interference coatings of alternately deposited layers of titanium dioxide and silicon dioxide, and is bonded to concave mirror substrate 1 with bonding material 11. As one example light source 10 may be configured of a high-pressure mercury lamp having a power equivalent to 200 W.

Here, gloss-forming buffer layer 3 has the functions of buffering infrared-to-heat converting layer 2 and visible light reflecting layer 4 so as not to come into direct contact with each other and permitting light (infrared rays) of a wavelength range which passes through visible light reflecting layer 4 to pass therethrough. Further, it also has the function of reducing the influence of the jaggedness produced on infrared-to-heat converting layer 2 and smoothing the light source-side surface of the visible light reflecting layer 4.

If this gloss-forming buffer layer 3 is not present, stress arises from heat generated due to the difference in thermal expansion coefficient arising at the joined interface between infrared-to-heat converting layer 2 and visible light reflecting layer 4, and concave mirror substrate 1 deforms so that the projected light from light source 10 will not propagate straight.

Next, an example of reflector 20a according to the present embodiment will be described in detail. Concave mirror substrate 1 can be formed using a substrate (to be referred to as "high thermal conductivity reflector substrate" hereinbelow) having a high thermal conductivity equal to or greater than 10 W/m·K. This makes it possible for the substrate to also provide the function of infrared-to-heat converting means. Generally, the thermal conductivity of aluminum is about 200 W/m·K, which is approximately 200 times as high as that of borosilicate glass or polycrystallized glass (about 1 W/m.K), which have been used for conventional light sources.

Further, as a technique for forming a film (infrared-to-heat converting layer 2) for efficiently converting infrared rays into heat, a technique for producing alumite has been known. In the present invention, a film of alumite chromate, which is obtained by anodizing aluminum in an aqueous solution of chromic anhydride, is produced. As a result of this, a crack-free coating which is resistant to high temperatures over 300 deg. C from activation of a high-pressure mercury lamp, sharp temperature changes and repeated fatigue could be obtained.

Further, it is general that the aforementioned alumite chromate formed on a pure aluminum substrate presents opaque, white gray to gray tones. In the present invention, the substrate was reacted with alloys such as Ni, Mg etc., contained in a material that is suitable for die casing (ADC12 etc.), thereby enabling production of blackish tones. As a result, the emissivity which indicates the degree of converting infrared rays into heat could be ensured to be equal to 0.9 or higher (at 300 deg.C), which is markedly close to that of a black body (having an emissivity of 1.0).

Further, when visible light reflecting layer 4 made of a cold mirror layer that selectively transmits infrared rays, reflects visible light, emitted from light source 10, is film-formed by vapor evaporation etc., it is critically important to efficiently reflect and concentrate the visible light from the light source (i.e., by reducing scattered light) onto a predetermined position. Accordingly, the concave mirror surface of concave mirror substrate 1 is required to have a glossy surface of wavelength order.

However, when an oxide film such as alumite chromate is selected as infrared-to-heat converting layer 2 as in the present invention, it is necessary to provide a coating for improving the glossiness to a specular surface level, between the former layer and the visible light reflecting layer 4. It has been difficult with conventional examples to reflect light from a light source to a predetermined position when the light is reflected by a concave mirror because of too much scattered light.

Moreover, in the light source proposed conventionally, visible light reflecting layer 4 is directly film-formed on infrared-to-heat converting layer 2 by vapor evaporation, and if a multi-layered interference coating of alternately deposited layers of titanium dioxide and silicon dioxide is formed, its linear expansion ratio is 3 to $5 \times 10^{-6}$/deg. C, which is one order of magnitude different from that of aluminum, $25 \times 10^{-6}$/deg. C. If no gloss-forming buffer layer 3 is provided so that the two layers are joined directly to each other, stress and strain derived from the difference in expansion coefficient at the joined interface will cause visible light reflecting layer 4 to crack, peel or be broken.

In the reflector of the present invention, performance degradation due to stress and strain is suppressed by using, as a buffering component, gloss-forming buffer layer 3 film-formed between infrared-to-heat converting layer 2 and visible light reflecting layer 4, by calcining Si resin or polyimide resin at high temperatures.

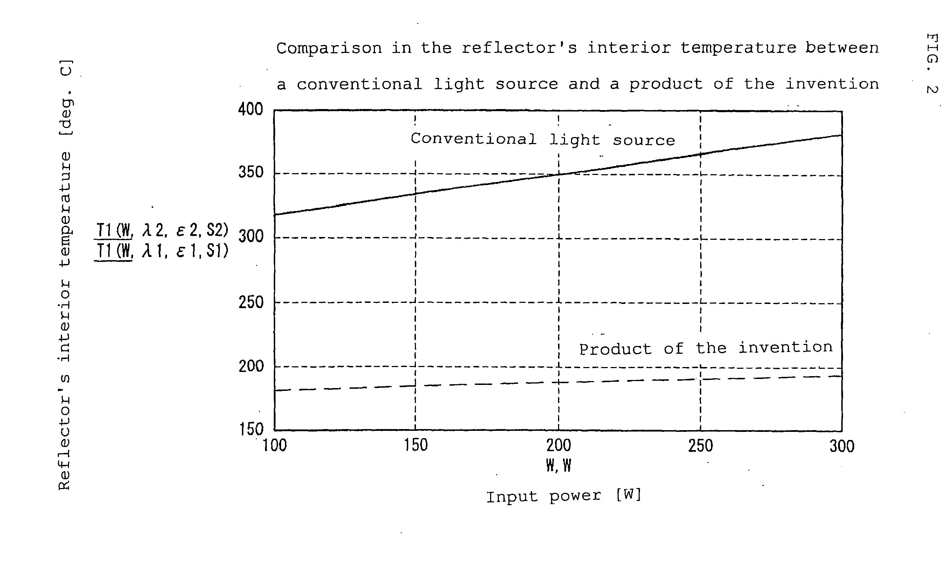

Provision of gloss-forming buffer layer 3 as a constituent of the reflector of the present invention and use of the layer as an undercoat for film-forming of visible light reflecting layer 4 so as to improve the glossiness to a specular surface level, made it possible to achieve both an extremely high emissivity of 0.9 or greater, which could not be achieved in the conventional example and an extremely high reflectivity of about 30% or greater than the conventional method. Here, the Si resin that was developed this time has a linear expansion coefficient of $12 \times 10^{-6}$/deg. C, which is a figure that is an intermediate linear expansion coefficient between that of aluminum and that of the visible light reflecting layer. Similarly, the same effect can be expected by use of polyimide resin. However, it is not necessary for gloss-forming buffer layer 3 to have an intermediate linear expansion ratio, depending on the mechanical flexibility of the layer. In the result of another experiment at this time, even use of a polyimide resin having a linear expansion coefficient of $40 \times 10^{-6}$/deg. C presented the same function as a buffering layer as long as it is highly ductile having a tensile ductility of 80%. Here, FIG. 2 is a graph showing the relationships of the reflector's inner surface temperature vs. the input power for a light source device including a reflector of the present invention and for a light source device including a conventional reflector.

[The second embodiment]

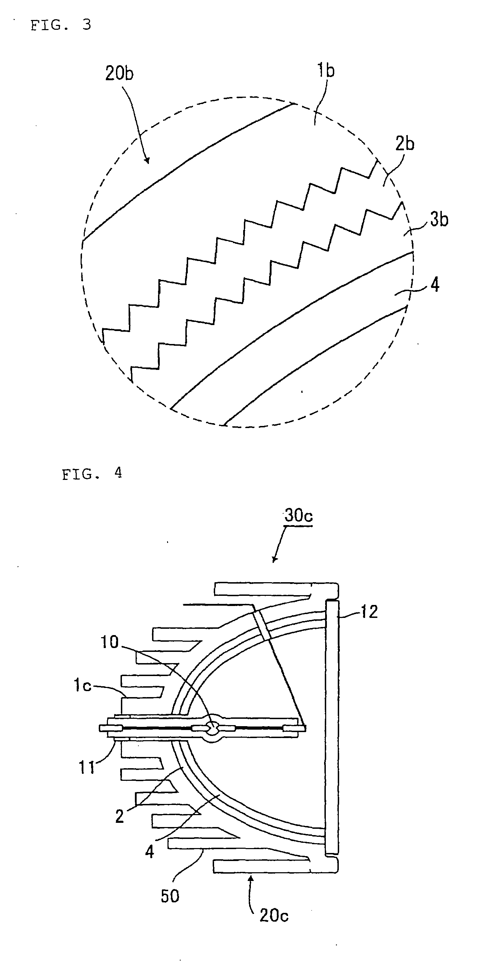

FIG. 3 is a configurational view showing a reflector structure according to the second embodiment of the present invention.

In the reflector 20a according to the first embodiment, concave mirror substrate 1, infrared-to-heat converting layer 2, gloss-forming buffer layer 3 and visible light reflecting layer 4 are provided with their layers joined in surface contact with one another. In a reflector 20b according to the present embodiment, the joined surfaces between the aforementioned layers are formed with projections and indentations, as sown in FIG. 3.

More specifically, projections and indentations are formed first on the surface of a concave mirror substrate 1b between concave mirror substrate 1b and an infrared-to-heat converting layer 2b.

Also, projections and indentations are formed on the surface of the infrared-to-heat converting layer 2b between the infrared-to-heat converting layer 2b and a gloss-forming buffer layer 3b.

Provision of projections and indentations on the light source-side surface of concave mirror substrate 1b and on the light source-side surface of the infrared-to-heat converting layer 2b,

(1) makes it possible to improve the infrared absorbing efficiency at the infrared-to-heat converting layer 2 surface; and,

(2) makes it possible with these projections and indentations to diffuse infrared rays so as not to concentrate the reflected infrared rays on a particular point.

Also in this case, gloss-forming buffer layer 3b can buffer infrared-to-heat converting layer 2b and visible light reflecting layer 4 so as not to come into direct contact with each other, alleviate the influence of the projections and indentations formed on infrared-to-heat converting layer 2b and make the light source-side surface of visible light reflecting layer 4 smooth.

[The third embodiment]

The reflector structure according to the third embodiment of the present invention is the same reflector structure according to the first or second embodiment of the present invention, except in that the method of forming the constituents of infrared-to-heat converting layer 2 and gloss-forming buffer layer 3 and part of the structure are different. Hence, only the different points will be described in the description hereinbelow,

Infrared-to-heat converting layer 2 is formed by coating ceramic over concave mirror substrate 1 formed of aluminum and calcining these. That is, this calcination modifies the interface between concave mirror substrate 1 and the ceramic coating, producing a metal oxide layer. This metal oxide layer has the function of converting infrared rays to heat.

Gloss-forming buffer layer 3 is formed by ceramic coating.

Next, the reason for forming infrared-to-heat converting layer 2 by the above method will be described.

In general, when an aluminum substrate on which a ceramic coating was applied is calcined, the reactions as follows will be observed.

(1) Oxygen in the atmosphere reaches the interface through the frit (ceramic coating grain) boundary and oxidizes the aluminum substrate surface.

(2) The frit fuses and, wets and seals the oxidized aluminum layer, thereby making it possible to stop a further oxidation. On the other hand, hydrogen absorbed in the aluminum substrate diffuses to the interface and causes hydrogen reduction to produce minute aluminum particles in the oxidized aluminum layer.

(3) Fused coating melts the oxidized aluminum layer while cobalt oxide and nickel oxide existing in the coating are reduced by minute aluminum, and tree-like crystals (dendrites) of Al-Co andAl-Ni are deposited on the interface. As a result, an electrochemical cell is formed between the Co and Ni deposited at the interface and the aluminum in the substrate, corroding the aluminum surface and roughing the interface, hence creating adequate adherence between aluminum and the glass layer.

(4) While the coating reacts with the substrate at the substrate interface, the surface issmoothened by calcination.

The infrared-to-heat converting layer 2 and gloss-forming buffer layer 3 thus film-formed in the above reactions can present the same effect as in the first embodiment, and equivalent result is obtained for specific numeral values of the emissivity and reflectivity.

[The fourth embodiment]

FIG. 4 is a configurational view showing an overall structure of a light source device including a reflector according to the fourth embodiment of the present invention. Reflector 20c of this light source device 30c has almost the same configuration as reflector 20a shown in the first embodiment except in that radiating fins 50 are integrally formed on the outer surface of concave mirror substrate 1c. By this configuration, heat transferred from heat converting layer 2 to the inner surface of concave mirror substrate 1c is conducted to the distal ends of fins 50 in accordance with the thermal conductivity of concave mirror substrate 1c. The amount of heat radiated from the outer surface of the concave mirror in the case of radiation by, for example natural convection can be calculated in the following equation:
$$\text{Radiated heat amount } Q$$
$$= \text{Heat transfer coefficient } h[W/m^2K] \times \text{The concave}$$
$$\text{mirror's outer surface area } S[m^2] \times \text{Temperature}$$
$$\text{difference } \Delta T[K],$$
$$h = 2.51 \times C \times (\Delta T/L) 0.25.$$

Here, Q is the amount of radiated heat [W], C is a coefficient determined depending on the shape of the concave mirror substrate, $\Delta T$ is the difference in temperature [K] between the concave mirror's outer surface and the ambient air, and L is a coefficient determined depending on the shape of the concave mirror.
The amount of heat radiation is calculated based on the embodiments,

- Without fin:

$$2.51 \times 0.52 \times ((250-25)/0.05)0.25 \times 0.009 \times (250 - 25) = 21.6[W]$$

- With fins:

$$2.51 \times 0.45 \times ((230-25)/0.05) \, 0.25 \times 0.027 \times (230 - 25) = 50.0[W].$$

From the above, it is understood that provision of radiating fins 50 achieves double or higher radiation efficiency.
Though the reflector structure of the present embodiment was assumed to be the same as that in the first embodiment except the concave mirror substrate, it may take the structure of the second or third embodiment.

[The fifth embodiment]

FIG. 5 is a configurational view showing an overall structure of a projection display apparatus according to the fifth embodiment of the present invention. Here, the same components as in the conventional light source device are alloted with the same reference numerals.

In the figure, the projection display apparatus according to the fifth embodiment of the present invention includes: as essential constituents, a light source device 30 including a reflector 20; a rotational color wheel 101; a rod lens 102; a condenser lens 103; a TIR prism 104; a reflection mirror 105; an optical modulator 106; and an enlargement projection optical system 107.

Here, the light source device 30 is assumed to have a reflector 20 according to any one of the above first to fourth embodiments of the present embodiment.

Next, the function of the projection display apparatus according to the present embodiment shown in FIG. 5 will be described.

Light emitted from light source 10 is reflected off the concave reflection mirror and passes through rotating color wheel 101, sequentially producing R G and B light in time division. Light having passed through color wheel 101 is diffused and shaped by rod lens 102 and passes through condenser lens 103, TIR prism 104 and reflection mirror 105, then projected onto optical modulator 106. Optical modulator 106 performs color modulation in accordance with the color of the projected light and image information. Then the optically-modulated light is projected on a screen (not shown) by way of projection lens 107 (enlargement projection optical system) so that a full-color image can be displayed.

The projection display apparatus according to the present embodiment shown in FIG. 5 is a color sequential projection display apparatus. Because the heat radiating capability of light source device 30 is high and the light reflection efficiency of the concave reflection mirror is high, the apparatus brings additional advantages as follows, compared to the projection display apparatus using a conventional light source device 100 shown in FIG. 6.

(1) Forced cooling system 110 shown in FIG. 5 can be simplified or omitted.
(2) It is possible to reduce the distance from the light source device to other constituents because the amount of infrared rays that are output from the light source device together with visible light is low.
(3) It is possible to improve the brightness by about 30 % even with the same input power.

The above first to fourth embodiments were described referring to a case where aluminum is used for the reflector substrate (concave mirror substrate 1), a high-pressure mercury lamp is used for light source 10, alumite chromate with metal oxides formed by silicon coating is used for infrared-to-heat converting layer 2, and Si resin or polyimide resin with ceramics is used for gloss-forming buffer coating 3.

The reflector of the present invention, however, can be configured using the following materials.

(1) For concave mirror substrate 1, metals such as copper, iron and the like, graphite, silicon and other ceramics may be used as long as they have a thermal conductivity of 10W/m·K or greater.
(2) For light source 10, metal halide lamps, halogen lamps, mercury lamps, xenon lamps, etc., may be used.
(3) For infrared-to-heat converting layer 2, materials presenting a high emissivity in the infrared range, such as other alumites, metal oxide coating layers, etc., may be used.
(4) For gloss-forming buffer layer 3, materials that permit infrared rays to pass therethrough and can smoothen jaggedness on the infrared-to-heat converting layer, such as Ni-Fe (nickel-iron) spinel pigments, fluoro-coatings, Teflon (registered trademark) coatings, PFA (polyfluoroethylene) coatings, quartz glass coatings, etc., may be used.

Other than the above, concave mirror substrate 1, light source 10, infrared-to-heat converting layer 2 and gloss-forming buffer layer 3 may employ any materials as long as they meet the aiming functions respectively, and should not be limited to those mentioned in each of the above embodiments.

Further, in each of the above embodiments, the reflector substrate (concave mirror substrate 1) and the infrared-to-heat converting layer 2 are configured of separate constituents, but in the present invention the reflector substrate (concave mirror substrate 1) and the infrared-to-heat converting layer 2 may be integrally formed using the same material.

## Claims

1. A reflector comprising:

a heat radiating means composed of a concave mirror-shaped substrate;
a light-to-heat converting component arranged on the light-reflecting surface side of the heat radiating means for absorbing light of a predetermined wavelength range and converting it to heat;
a specific wavelength range reflecting component which reflects light of a specific wavelength range onto the light-to-heat converting component and permits light of the predetermined wavelength range to pass therethrough; and
a buffering component disposed between the light-to-heat converting component and the specific wavelength range reflecting component for buffering so that the light-to-heat converting component and the specific wavelength range reflecting component will not come in direct contact with each other and for permitting light of a predetermined wavelength range that passes through the specific wavelength range reflecting component to pass therethrough.

2. The reflector according to Claim 1, wherein the light-to-heat converting component, the buffering component and the specific wavelength range reflecting component are laminated in the order mentioned over the reflective surface of the heat radiating means and joined in surface contact with one another.

3. The reflector according to Claim 2, wherein projections and indentations are formed over the joined interface where the light-to-heat converting component and the heat radiating means are joined.

4. The reflector according to Claim 2, wherein projections and indentations are formed over the buffering component-side surface of the light-to-heat converting component.

5. The reflector according to any one of Claims 1 to 4, wherein the heat radiating means is composed of a substrate having a thermal conductivity of 10 W/m·K or greater and also provides the function of the infrared-to-heat converting component.

6. The reflector according to any one of Claims 2 to 5, wherein the light-to-heat converting component is formed by anodizing aluminum in an aqueous solution of chromic anhydride.

7. The reflector according to any one of Claims 2 to 6, wherein the buffering component is film-formed on the light-absorbingsurface side of the light-to-heat converting component by calcining Si resin or polyimide resin at high temperatures.

8. The reflector according to any one of Claims 1 to 7, wherein radiating fins are provided on the outer surface of the concave mirror-shaped substrate and integrally formed with the substrate.

9. A light source device including a reflector according to any one of claims 1 to 8, in addition to a light source.

10. A projection display apparatus including a light source device according to Claim 9.

FIG. 1

FIG. 2

Comparison in the reflector's interior temperature between a conventional light source and a product of the invention

FIG. 3

FIG. 4

FIG. 5

FIG. 6

**INTERNATIONAL SEARCH REPORT**

| International application No. |
|---|
| PCT/JP2004/015487 |

| A. CLASSIFICATION OF SUBJECT MATTER |
|---|
| Int.Cl⁷ G03B21/00 |

According to International Patent Classification (IPC) or to both national classification and IPC

| B. FIELDS SEARCHED |
|---|
| Minimum documentation searched (classification system followed by classification symbols) |
| Int.Cl⁷ G03B21/00-21/30, G02B5/00-5/136 |

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 64-084506 A (Toshiba Denzai Kabushiki Kaisha), 29 March, 1989 (29.03.89), Full text; all drawings (Family: none) | 1-10 |
| Y | JP 63-269104 A (Toshiba Denzai Kabushiki Kaisha), 07 November, 1988 (07.11.88), Full text; all drawings (Family: none) | 1-10 |
| A | JP 05-144309 A (Toshiba Lighting & Technology Corp.), 11 June, 1993 (11.06.93), Full text; all drawings (Family: none) | 1-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 November, 2004 (09.11.04) | 22 November, 2004 (22.11.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/015487 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 64-044515 U (Matsushita Electric Works, Ltd.), 16 March, 1989 (16.03.89), Full text; all drawings (Family: none) | 1-10 |
| A | JP 03-168793 A (Pioneer Electronic Corp.), 22 July, 1991 (22.07.91), Full text; all drawings & US 4985815 A | 1-10 |
| A | JP 2003-302509 A (Hitachi, Ltd.), 24 October, 2003 (24.10.03), Full text; all drawings (Family: none) | 1-10 |
| A | JP 2003-051210 A (3M Innovative Properties Co.), 21 February, 2003 (21.02.03), Full text; all drawings (Family: none) | 1-10 |
| A | JP 2000-047327 A (Iwasaki Electric Co., Ltd.), 18 February, 2000 (18.02.00), Full text; all drawings (Family: none) | 1-10 |
| A | JP 10-090505 A (Alusuisse Technology & Management, Ltd.), 10 April, 1998 (10.04.98), Full text; all drawings & US 5919561 A | 1-10 |
| A | JP 06-003512 A (Kabushiki Kaisha Equesutorian), 14 January, 1994 (14.01.94), Full text; all drawings (Family: none) | 1-10 |
| A | JP 63-241802 A (Toshiba Denzai Kabushiki Kaisha), 07 October, 1988 (07.10.88), Full text; all drawings (Family: none) | 1-10 |
| A | JP 63-298303 A (Toshiba Denzai Kabushiki Kaisha), 06 December, 1988 (06.12.88), Full text; all drawings (Family: none) | 1-10 |

Form PCT/ISA/210 (continuation of second sheet) (January 2004)

**INTERNATIONAL SEARCH REPORT**

| International application No. |
| --- |
| PCT/JP2004/015487 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 63-271201 A  (Toshiba Denzai Kabushiki Kaisha),<br>09 November, 1988 (09.11.88),<br>Full text; all drawings<br>(Family: none) | 1-10 |
| A | JP 63-269101 A  (Toshiba Denzai Kabushiki Kaisha),<br>07 November, 1988 (07.11.88),<br>Full text; all drawings<br>(Family: none) | 1-10 |
| A | JP 63-269102 A  (Toshiba Denzai Kabushiki Kaisha),<br>07 November, 1988 (07.11.88),<br>Full text; all drawings<br>(Family: none) | 1-10 |
| A | JP 63-269103 A  (Toshiba Denzai Kabushiki Kaisha),<br>07 November, 1988 (07.11.88),<br>Full text; all drawings<br>(Family: none) | 1-10 |

Form PCT/ISA/210 (continuation of second sheet) (January 2004)